# EUROPÄISCHE PATENTSCHRIFT

(11) **EP 2 571 762 B1**
(45) Veröffentlichungstag und Bekanntmachung des Hinweises auf die Patenterteilung: **03.12.2014**
(21) Anmeldenummer: 11720497.4
(22) Anmeldetag: 19.05.2011
(51) Int. Cl.: B64C 29/00, B64D 27/24, B64C 27/82

(54) **KIPPFLÜGEL-FLUGZEUG**
TILT WING AIRCRAFT
AÉRONEF À AILES BASCULANTES

(30) Priorität: 19.05.2010 DE 102010021022
(43) Veröffentlichungstag der Anmeldung: 27.03.2013
(73) Patentinhaber: Airbus Defence and Space GmbH, 85521 Ottobrunn (DE)
(72) Erfinder: STUHLBERGER, Johannes, 83684 Tegernsee (DE)
(74) Vertreter: Maiwald Patentanwalts GmbH
(86) Internationale Anmeldenummer: PCT/EP2011/058141
(87) Internationale Veröffentlichungsnummer: WO 2011/144696

(56) Entgegenhaltungen:
- DE-A1- 1 406 385
- DE-A1-102007 017 332
- US-A- 2 936 967
- US-A- 2 969 935
- US-A- 3 241 791
- US-A- 4 605 185
- US-A1- 2005 045 762
- US-A1- 2008 184 906

## Beschreibung

### GEBIET DER ERFINDUNG

Die Erfindung betrifft ein Kippflügel-Flugzeug sowie ein Verfahren zu dessen Betrieb.

### HINTERGRUND DER ERFINDUNG

Kippflügel-Flugzeuge sind an sich seit langem bekannt. Einen guten Überblick bietet der Artikel von William F. Chana und T. M. Sullivan, "The Tilt Wing Design for a Family of High Speed VSTOL Aircraft", presented at the American Helicopter Society, 49th Annual Forum, St. Louis, Missouri, 19.-21. Mai 1993.

Aus der DE 14 06 385 A1 ist ein Kippflügelflugzeug mit einem Kippflügel bekannt, der vier Propeller aufweist. Weiterhin ist zur Regulierung des Aufstieges des Flugzeuges während des Senkrechtfluges oder Schwebefluges, wenn die Höhenruder im allgemeinen unwirksam sind, ein Strahltriebrohr vorgesehen, welches vom Piloten in geeigneter Weise zur wahlweisen Aussendung eines Luftstrahls nach oben und unten geregelt werden kann. Gegebenenfalls kann auch ein Leitwerkrotorpropeller vorgesehen sein, der in einer horizontalen Ebene rotiert und der Steuerung des Aufsteigens des Flugzeugs beim Vertikalflug dient.

Die US 2 936 967 beschreibt ein Kippflügelflugzeug mit einem Kippflügel, der mit zwei Propellern versehen ist. Am Heckleitwerk dieses Flugzeugs sind ein Fan, der einen Schub in Querrichtung erzeugt, sowie ein weiterer Fan, der einen Schub in Vertikalrichtung erzeugt, vorgesehen. Während des Schwebefluges oder des Fluges in Vertikalrichtung dienen diese Fans zur Gier- bzw. Nicksteuerung.

Aus der US 3 241 791 ist ein Verbundhubschrauber bekannt, der einen Hauptrotor und einen Rumpf aufweist, an dem Flügel angebracht sind. Mittel zum Korrigieren des Drehmoments umfassen einen am Rumpfheck vorgesehenen Propeller, der sich um eine in Längsrichtung des Rumpfes verlaufende Längsachse dreht, Mittel zum Antrieb des Propellers, und, einen Mantel, der den Propeller umschliesst und einen in Längsrichtung verlaufenden Luftkanal bildet, in welchem sich der Propeller dreht und der konzentrisch zur Propellerachse ist. Der umschliessende Mantel weist einen Tragflächenquerschnitt auf, wodurch der Luftkanal ein Einlassende in der Nähe des Rumpfes aufweist sowie ein Auslassende an der Rückseite des Mantels mit größerem Durchmesser als im mittleren Abschnitt. Der Propeller ist so angeordnet, dass er sich im wesentlichen im mittleren Abschnitt des Luftkanals dreht und sich im wesentlichen über den mittleren Abschnitt erstreckt. Ein vertikales Ruder ist am Auslassende des Luftkanals so vorgesehen, dass es sich über den Auslass erstreckt und drehbeweglich am Mantel angebracht ist, so dass es eine Schwenkbewegung um eine Vertikalachse zum Ablenken des Nachstroms des Propellers durchführen kann. Weiterhin sind eine feste Höhenflosse, eine feste Seitenflosse, und vertikal verkippbare Trimm-Hilfsruder am Mantel am Auslassende vorgesehen, zum Steuern der Nickbewegung des Hubschraubers.

Aus der US 4 605 185 ist ein Flugzeug bekannt, das eine Brennkraftmaschine aufweist, die einen Stromgenerator antreibt. Zwei Transformatoren sind elektrisch an den Generator angeschlossen und jeweils elektrisch an einen Elektromotor angeschlossen. Jeder Elektromotor treibt einen der beiden an der Tragfläche des Flugzeugs vorgesehenen Propeller an. Eine Notfallbatterie ist zwischen den Generator und die Transformatoren geschaltet, damit bei einem Ausfall der Brennkraftmaschine die Batterie Strom zum Fortsetzen des Betriebs der Elektromotoren liefert.

Aus der US 2 969 935 ist ein Flugzeug bekannt, das mit mehreren verstellbaren Antriebseinheiten versehen ist.

### ZUSAMMENFASSUNG DER ERFINDUNG

Aufgabe der Erfindung ist die Bereitstellung eines verbesserten Kippflügel-Flugzeugs.

Die Aufgabe wird durch die Gegenstände der unabhängigen Ansprüche gelöst. Ausgestaltungen der Erfindung ergeben sich aus den Unteransprüchen.

Die Heckantriebseinheit im erfindungsgemässen Kippflügel-Flugzeug kann im Reiseflug einen gewissen Anteil, oder sogar den Hauptanteil, des Vorschubs des Flugzeugs zur Verfügung stellen. Dies führt dazu, dass etwa durch vordere, am Kippflügel angebrachte Propeller erzeugte Lärmemissionen von der Kabine des Flugzeugs weiter zum Heck hin verlagert werden.

Infolge des von der Heckantriebseinheit erzeugten Vorschubs können darüber hinaus die am Kippflügel angebrachten Propeller des Flugzeugs im Hinblick auf Schwebeflug und Steigflug optimiert werden, wogegen die Heckantriebseinheit im Hinblick auf Reiseflug optimiert ist.

Gemäß einem weiteren Aspekt der Erfindung weist das Kippflügel-Flugzeug gemäß der Erfindung einen Hybridantrieb auf, der für jeden Propeller des Flugzeugs jeweils einen diesen antreibenden Elektromotor aufweist, und der zumindest ein Energieerzeugungsmodul aufweist, das mit einem Verbrennungsmotor und einem Generator zur Erzeugung elektrischer Energie versehen ist.

Infolge des Antriebs der Propeller jeweils durch einen Elektromotor ist es nicht erforderlich, die beiden für den Schwebe- und den Steigflug vorgesehenen Propeller mit einer Transmissionswelle zu verbinden, wie es bei einem Kipprotor-Flugzeug, etwa des Typs Bell-Boeing V22 Osprey, erforderlich ist, um dem Ausfall eines Triebwerks zu begegnen. Bei der Erfindung ist vorzugsweise jeder Elektromotor redundant ausgebildet.

Die zum Antrieb notwendige Leistung kann über eine für alle Propeller gemeinsame Motor- oder Turbineneinheit bereitgestellt werden, und die Leistung dann über eine elektrische Kupplung je nach Missionsaufgabe optimiert auf die Propeller verteilt werden. Zur Erzielung einer Redundanz des Hybridantriebs ist gemäß einem weiteren Aspekt der Erfindung zumindest ein weiteres Energieerzeugungsmodul vorgesehen.

Die bei der Erfindung verwendeten Elektromotoren sind vorzugsweise als trägheitsarmer Direktantrieb hoher Leistungsdichte ausgebildet, wie in der DE 10 2007 013 732 A1 beschrieben, also als elektrische Maschinen mit Permanenterregung, die sich durch hohes spezifisches Drehmoment und Leistungsdichte sowie ein geringes Trägheitsmoment, insbesondere für Direktantrieb der Propeller, eignen.

Gemäß einem weiteren Aspekt der Erfindung ist eine Speichereinheit für elektrische Energie vorgesehen. Diese kann dazu dienen, zumindest zeitweilig, zusätzlich oder alternativ, die die Propeller antreibenden Elektromotoren mit Strom zu versorgen. Weiterhin wird hierdurch die Redundanz erhöht.

Gemäß einem weiteren Aspekt der Erfindung sind das eine Energieerzeugungsmodul und das weitere Energieerzeugungsmodul gleich oder gleichartig ausgebildet. Hierdurch lässt sich ein modularer Aufbau erzielen, mit mehreren Energieerzeugungsmodulen, die jeweils mit einem Verbrennungsmotor und einem Generator versehen sind.

Gemäß einem weiteren Aspekt der Erfindung kann jedoch das weitere Energieerzeugungsmodul als Brennstoffzelleneinheit ausgebildet sein. Diese kann Strom zum Aufladen der Speichereinheit für elektrische Energie zur Verfügung stellen, oder zusätzlichen Strom für den Betrieb der Elektromotoren.

Gemäß einem weiteren Aspekt der Erfindung wird die von dem zumindest einen Energieerzeugungsmodul erzeugte elektrische Energie je nach Betriebserfordernis auf die die Propeller antreibenden Elektromotoren verteilt. Hierbei wird beispielsweise jenem Elektromotor, welcher den Heckrotor antreibt, im Reiseflug mehr elektrische Energie zugeführt, als dieser im Schwebe- oder Steigflug benötigt. Es kann daher gemäß einem weiteren Aspekt der Erfindung im Reiseflug der Hauptanteil der elektrischen Energie jenem Elektromotor zugeführt werden, welcher den Heckpropeller antreibt.

Im Extremfall könnte auch der gesamte Vortrieb durch den Heckpropeller bereitgestellt werden, wobei dann die vorderen, am Kippflügel angebrachten Propeller betriebsmäßig auf geringen Widerstand optimiert oder sogar strömungsgünstig stillgesetzt werden können.

### KURZE BESCHREIBUNG DER FIGUREN

Es zeigt:
FIG. 1 eine Perspektivansicht eines Kippflügel-Passagierflugzeugs;
FIG. 2 ein unbemanntes Kippflügel-Flugzeug gemäß der Erfindung;
FIG. 3 ein unbemanntes Kippflügel-Flugzeug gemäß der Erfindung, wobei Fig. 3A das Flugzeug im Steigflug ("climb") in Seitenansicht, Fig. 3B das Flugzeug im Schwebeflug ("hover") in Ansicht von vom, Fig. 3C das Flugzeug im Steigflug in Aufsicht zeigt und Fig. 3D eine entsprechende Perspektivansicht, und Fig. 3E eine Perspektivansicht des Flugzeugs im Reiseflug ("cruise");
FIG. 4 ein unbemanntes Kippflügel-Flugzeug gemäß der Erfindung im Reiseflug, Fig. 4A in Seitenansicht, Fig. 4B in Ansicht von vom, Fig. 4C in Aufsicht und Fig. 4D in Perspektivansicht;
FIG. 5 die Flugsteuerung eines Kippflügel-Flugzeugs und zwar Fig. 5A die Nicksteuerung ("pitch"), Fig. 5B die Rollsteuerung ("roll") und Fig. 5C die Giersteuerung ("yaw");
FIG. 6 einen Hybridantrieb (schematisch) für ein Kippflügel-Flugzeug gemäß der Erfindung; und
FIG. 7 einen weiteren Hybridantrieb (schematisch) für ein Kippflügel-Flugzeug gemäß der Erfindung.

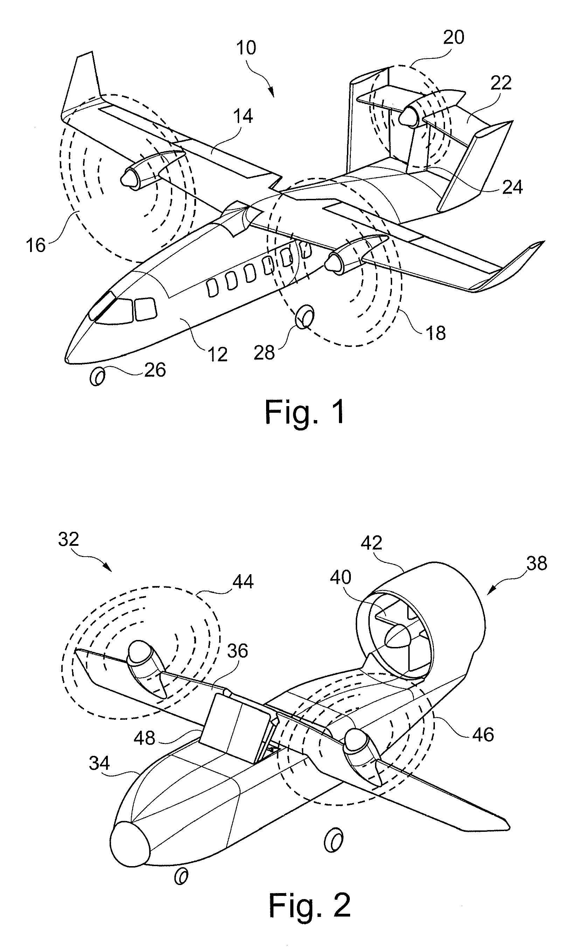

Die erfindungsgemässe Verschwenkbarkeit des Heckpropellers um die Hoch- und Querachse des Flugzeugs wird in den Figuren 2, 3A-3E und 4A-4D nicht gezeigt.

### DETAILLIERTE BESCHREIBUNG VON AUSFÜHRUNGSBEISPIELEN

Die Darstellungen in den Figuren sind schematisch und nicht maßstäblich.

Für gleiche oder ähnliche Elemente werden gleiche oder entsprechende Bezugszeichen verwendet.

Fig. 1 zeigt ein als Passagierflugzeug ausgebildetes Kippflügel-Flugzeug 10 gemäß der Erfindung. Das Flugzeug weist einen Rumpf 12 auf, einen Kippflügel 14, an dem rechts ein vorderer Propeller 16 und links ein vorderer Propeller 18 angebracht sind, sowie einen Heckpropeller 20, der ein Heckleitwerk anströmt, welches ein Höhenleitwerk 22 und ein Seitenleitwerk 26 aufweist. Weiterhin sind in Fig. 1 schematisch ein Bugrad 26 und ein linkes Seitenrad 28 des Flugzeugs dargestellt.

Fig. 2 zeigt ein unbemanntes Flugzeug, ein so genanntes UAV (unmanned aerial vehicle), das als Kippflügel-Flugzeug 32 gemäß der vorliegenden Erfindung ausgebildet ist. Derartige UAVs werden auch als Drohnen bezeichnet. Hierbei ist - im Unterschied etwa zu Modellflugzeugen - ein UAV als Flugzeug zu verstehen, welches eine ausreichende Lasttragkapazität und ausreichende Flugeigenschaften für Aufklärungs- und Missionseinsätze aufweist, etwa für den Transport und Kameras für Aufklärungszwecke, oder für den Transport von Waffen für Missionszwecke. Die Drohne 32 weist einen Rumpf 34 auf, einen Kippflügel 36, und einen ummantelten Heckpropeller 38, der aus dem eigentlichen Heckpropeller 40 und einem Mantel 42 besteht. Am Kippflügel 36 sind ein vorderer Propeller 44 und ein vorderer Propeller 46 angebracht.

In Fig. 1 ist der Kippflügel 14 des Flugzeugs 10 in Reiseflugstellung dargestellt, wogegen in Fig. 2 der Kippflügel 36 der Drohne 32 in der Stellung für Steigflug dargestellt ist. Für den Schwebeflug wird der Kippflügel so weit verschwenkt, dass dessen Vorder- und Hinterkante (in Reiseflugstellung) dann annähernd auf der Hochachse des Flugzeugs liegen.

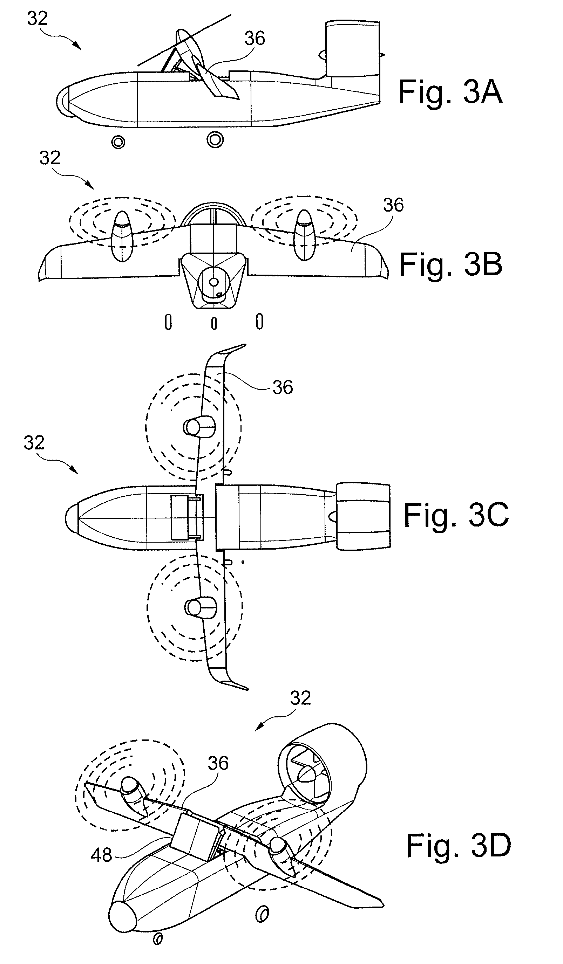

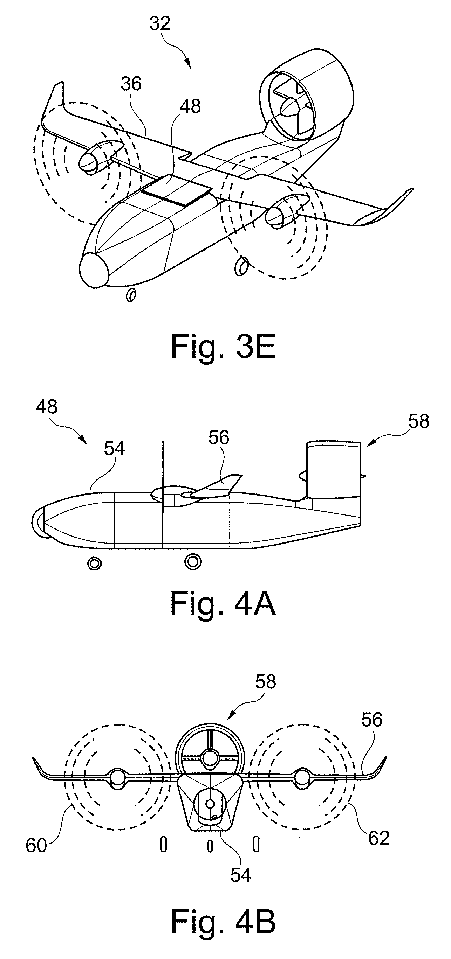

Fig. 3 verdeutlicht die verschiedenen Flugzustände einer Drohne 32, die einen Kippflügel 36 und eine Klappe 48 aufweist, die im Reiseflug geschlossen ist, aber zum Ermöglichen des Verkippens des Kippflügels 36 beim Schwebeflug oder Steigflug geöffnet wird.

Fig. 3A ist eine Seitenansicht der Drohne 32 im Steigflug; Fig. 3B ist eine Ansicht von vom der Drohne 32 im Schwebeflug; Fig. 3C ist eine Aufsicht auf die Drohne 32 im Steigflug; Fig. 3D ist eine Perspektivansicht der Drohne 32 im Steigflug (mit geöffneter Klappe 48); und Fig. 3E ist eine Perspektivansicht der Drohne 32 im Reiseflug (mit geschlossener Klappe 48).

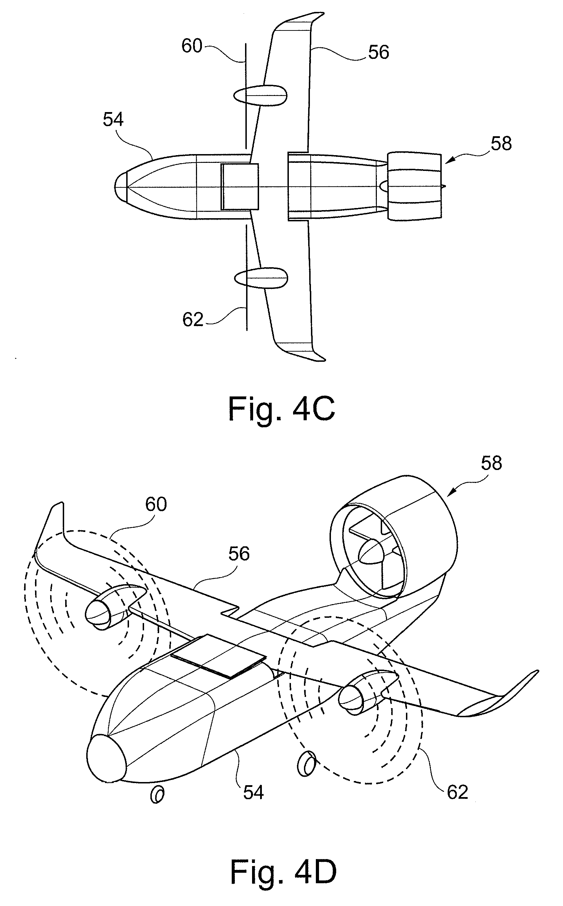

Fig. 4 verdeutlicht die verschiedenen Flugzustände einer Drohne 48, die einen Rumpf 54 aufweist, einen Kippflügel 56, und einen ummantelten Heckpropeller 58. Fig. 4A zeigt die Drohne 48 im Reiseflug in Seitenansicht; Fig. 4B ist eine Ansicht von vom der Drohne, die am Kippflügel 56 einen vorderen Propeller 60 und einen vorderen Propeller 62 aufweist; Fig. 4C ist eine Aufsicht auf diese Drohne; und Fig. 4D zeigt diese Drohne in Perspektivansicht im Reiseflug.

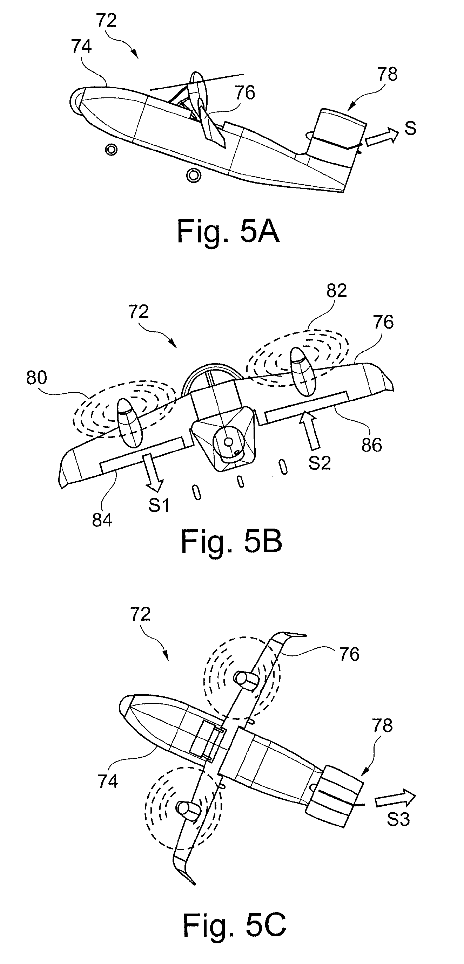

Fig. 5 verdeutlicht die Flugsteuerung eines Kippflügel-Flugzeugs 72, welches einen Rumpf 74 aufweist, einen Kippflügel 76, einen ummantelten Heckpropeller 78, und zwei vordere Propeller 80, 82 am Kippflügel 76.

Weiterhin ist der Kippflügel 76, wie aus der Ansicht von vom der Fig. 5B hervorgeht, mit einem linken Querruder 8 und einem rechten Querruder 86 versehen.

Die Nicksteuerung des Kippflügel-Flugzeugs 72 erfolgt, wie in Fig. 5A gezeigt, durch Erzeugung einer nach oben gerichteten Schubvektorkomponente S durch den ummantelten Heckpropeller 78.

Die Rollsteuerung des Kippflügel-Flugzeugs 72 (um die Flugzeuglängsachse) erfolgt, wie in Fig. 5B dargestellt, durch Erzeugung von durch die Querruder 84, 86 und/oder unterschiedlichem Schub infolge der vorderen Propeller 80, 82 erzeugte Schubvektoren, wie dies anhand der Schubvektoren oder Schubvektorkomponenten S1 (nach unten gerichtet) und S2 (nach oben gerichtet) dargestellt ist.

Die Giersteuerung des Kippflügel-Flugzeugs 72 erfolgt, wie in Fig. 5C gezeigt, durch Bereitstellung einer lateral (seitlich) gerichteten Schubvektorkomponente S3 durch den ummantelten Heckpropeller 78.

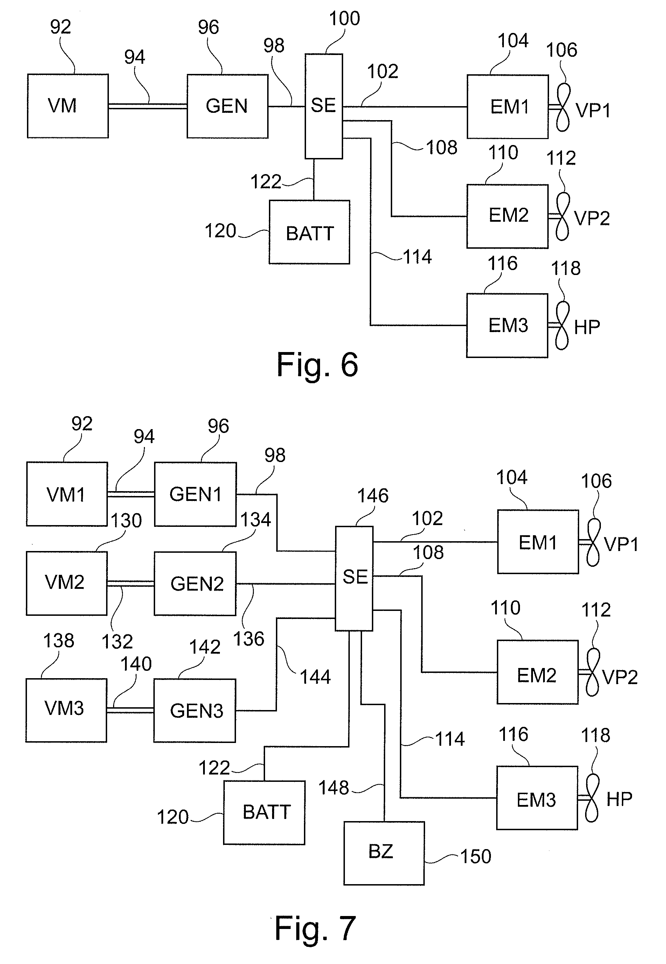

Fig. 6 zeigt schematisch einen Hybridantrieb für ein Kippflügel-Flugzeug gemäß der Erfindung. Ein Verbrennungsmotor 92 treibt über eine Welle 94 einen Generator 96 an, der elektrischen Strom 98 über eine Leitung 98 an eine zentrale Steuereinheit 100 schickt. Diese verteilt die erzeugte elektrische Energie je nach Bedarf bzw. Betriebszustand über eine erste Leitung 102 an einen Elektromotor 104, der einen ersten vorderen Propeller 106 antreibt, und/oder über eine Leitung 108 an einen zweiten Elektromotor 110, der einen zweiten vorderen Propeller 112 antreibt, und/oder über eine Leitung 114 an einen dritten Elektromotor 116, der einen Heckpropeller 118 antreibt. Weiterhin kann die Steuereinheit 100 über eine Leitung 122 einer Batterie 120 Strom zuführen, aber auch aus dieser entnehmen, um den Betrieb zumindest eines der Elektromotoren 104, 110, 116 zu unterstützen (so genannter "boost").

Verbrennungsmotor 92 und Generator 96 bilden ein Energieerzeugungsmodul. Der Verbrennungsmotor kann beispielsweise ein Wankelmotor sein, ein Kolbenmotor oder eine Turbine.

Die Elektromotoren 104, 110, 116 können als elektrische Triebwerke erheblich kleiner und leichter als mechanische Turbo- oder Motorantriebseinheiten ausgebildet sein.

Die von dem Energieerzeugungsmodul 92, 96 erzeugte elektrische Energie wird, optimiert in Bezug auf den jeweiligen Betriebszustand, an die Elektromotoren 104, 110, 116 verteilt. Die Elektromotoren weisen den weiteren Vorteil auf, dass ihre Drehzahl erheblich schneller variiert werden kann, als dies bei einem Verbrennungsmotor als Antriebsmotor der Fall ist.

Ein weiterer Vorteil ist darin zu sehen, dass infolge der Tatsache, dass Elektromotoren als elektrische Triebwerke erheblich kleiner und leichter bauen, wie voranstehend geschildert, Kippmechanismen für den Kippflügel sowie Auftrieb und Vortrieb erzeugende Triebwerke wesentlich vereinfacht ausgebildet werden können.

Fig. 7 zeigt eine Ausführungsform des Hybridantriebs gemäß der Erfindung, bei welcher im Vergleich zu Fig. 6 zwei zusätzliche Energieerzeugungsmodule 130, 134 und 138, 142 vorgesehen sind, sowie entsprechende Leitungen 136, 144. Wie in Fig. 6 weist das erste Energieerzeugungsmodul einen Verbrennungsmotor 92 auf, der über eine Welle 94 einen Generator 96 antreibt. Das zweite Energieerzeugungsmodul in Fig. 7 weist einen Verbrennungsmotor 130 auf, der über eine Welle 132 einen Generator 134 antreibt. Das dritte Energieerzeugungsmodul in Fig. 7 weist einen Verbrennungsmotor 138 auf, der über eine Welle 140 einen Generator 142 antreibt.

Die drei Energieerzeugungsmodule 92, 96; 130, 134; 138, 142 können je nach Betriebserfordernis gleichzeitig in Betrieb sein, aber es kann auch beispielsweise eines dieser drei Energieerzeugungsmodule abgeschaltet sein oder im Leerlauf in Bereitschaft betrieben werden.

Weiterhin können beispielsweise zwei dieser Energieerzeugungsmodule mit voller Leistung arbeiten, um aufgeteilt durch die zentrale Steuereinheit 146 in Fig. 7 die drei Elektromotoren 104, 110, 116 jeweils nach dem dortigen Erfordernis mit Strom zu versorgen. Weiterhin kann beispielsweise im Reiseflug nur der Elektromotor 116 für den Heckpropeller 118 mit voller Leistung betrieben werden, wogegen die Elektromotoren 104, 110 für die vorderen Propeller 106, 112 so mit verringerter Leistung betrieben werden, dass diese Propeller dem Vortrieb keinen unnötigen Widerstand entgegensetzen.

Zur Erhöhung der Redundanz, und der Ausfallsicherheit, aber auch zur kurzzeitigen Leistungserhöhung ("boost") kann elektrische Energie eingesetzt werden, die bei dem Hybridantrieb von Fig. 7 von der Batterie 120 geliefert wird, oder von einer Brennstoffzelleneinheit 150 über eine Leitung 148 der Steuereinheit 146 zugeführt wird.

Ergänzend wird darauf hingewiesen, dass "umfassend" und "aufweisend" keine anderen Elemente oder Schritte ausschließt, und "eine" oder "ein" keine Vielzahl ausschließt. Weiterhin wird darauf hingewiesen, dass Merkmale oder Schritte, die unter Verweis auf eines der obigen Ausführungsbeispiele beschrieben wurden, auch in Kombination mit anderen Merkmalen bzw. Schritten anderer voranstehend beschriebener Ausführungsbeispiele verwendet werden können. Bezugszeichen in den Ansprüchen sind nicht als Einschränkungen anzusehen.

### BEZUGSZEICHENLISTE

- 10: Passagierflugzeug
- 12: Rumpf
- 14: Kippflügel
- 16: vorderer Propeller
- 18: vorderer Propeller
- 20: Heckpropeller
- 22: Höhenleitwerk
- 24: Seitenleitwerk
- 26: Bugrad
- 28: Seitenrad
- 30:
- 32: Drohne (UAV, Unmanned Aerial Vehicle)
- 34: Rumpf
- 36: Kippflügel
- 38: Ummantelter Heckpropeller
- 40: Heckpropeller
- 42: Mantel
- 44: vorderer Propeller
- 46: vorderer Propeller
- 48: Klappe
- 50:
- 52: Drohne
- 54: Rumpf
- 56: Kippflügel
- 58: Ummantelter Heckpropeller
- 60: vorderer Propeller
- 62: vorderer Propeller
- 64:
- 66:
- 68:
- 70:
- 72: Kippflügel-Flugzeug
- 74: Rumpf
- 76: Kippflügel
- 78: ummantelter Heckpropeller
- 80: vorderer Propeller
- 82: vorderer Propeller
- 84: Querruder
- 86: Querruder
- 88:
- 90:
- S, S1, S2, S3: Schubvektoren
- 92: Verbrennungsmotor (VM; VM1)
- 94: Welle
- 96: Generator (GEN; GEN1)
- 98: Leitung
- 100: Steuereinheit
- 102: Leitung
- 104: Elektromotor 1
- 106: vorderer Propeller
- 108: Leitung
- 110: Elektromotor 2
- 112: vorderer Propeller
- 114: Leitung
- 116: Elektromotor 3
- 118: Heckpropeller
- 120: Batterieeinheit
- 122: Leitung
- 124:
- 126:
- 128:
- 130: Verbrennungsmotor 2
- 132: Welle
- 134: Generator 2
- 136: Leitung
- 138: Verbrennungsmotor 3
- 140: Welle
- 142: Generator 3
- 144: Leitung
- 146: Steuereinheit
- 148: Leitung
- 150: Brennstoffzelleneinheit

## Patentansprüche

1. Kippflügel-Flugzeug (10) mit
einem Kippflügel (14) für den eine Anzahl von 2n Propellern (16, 18) vorgesehen ist, wobei n eine positive ganze Zahl (1, 2, 3, 4 ...) ist, und mit
einer Heckantriebs- und steuereinheit, die dazu ausgebildet ist, einen Vorschub zu erzeugen, und auch im Schwebeflug sowie im Steigflug des Flugzeugs eine wahlweise nach oben oder unten gerichtete Schubkomponente zur Nicksteuerung und eine lateral gerichtete Schubkomponente zu erzeugen, und einen ummantelten Heckpropeller (78) umfasst, der dazu ausgebildet ist, um die Hochachse und um die Querachse des Flugzeugs verschwenkbar zu sein.

2. Kippflügel-Flugzeug nach einem der Anspruch 1, **gekennzeichnet durch** einen Hybridantrieb, der für jeden Propeller (106; 112; 118) jeweils einen diesen antreibenden Elektromotor (104; 110; 116) aufweist, sowie zumindest ein Energieerzeugungsmodul (92, 96) aufweist, das mit einem Verbrennungsmotor (92) und einem Generator (96) zur Erzeugung elektrischer Energie versehen ist.

3. Kippflügel-Flugzeug nach Anspruch 2, **dadurch gekennzeichnet, dass** zumindest ein weiteres Energieerzeugungsmodul (130, 134; 150) vorgesehen ist.

4. Kippflügel-Flugzeug nach Anspruch 2 oder 3, **dadurch gekennzeichnet, dass** eine Speichereinheit (120) für elektrische Energie vorgesehen ist.

5. Kippflügel-Flugzeug nach Anspruch 3 oder 4, **dadurch gekennzeichnet, dass** das eine Energieerzeugungsmodul (92, 96) und das weitere Energieerzeugungsmodul (130, 134) gleich oder gleichartig ausgebildet sind.

6. Kippflügel-Flugzeug nach Anspruch 3 oder 4, **dadurch gekennzeichnet, dass** das weitere Energieerzeugungsmodul als Brennstoffzelleneinheit (150) ausgebildet ist.

7. Verfahren zum Betrieb eines Kippflügel-Flugzeugs nach einem der Ansprüche 2 bis 6, **dadurch gekennzeichnet, dass** die von dem zumindest einen Energieerzeugungsmodul (92, 96) erzeugte elektrische Energie je nach Betriebserfordernis auf die die Propeller (106, 112, 118) antreibenden Elektromotoren (104, 110, 116) verteilt wird.

8. Verfahren nach Anspruch 7, **dadurch gekennzeichnet, dass** im Reiseflug der Hauptanteil der elektrischen Energie dem Elektromotor (116) zugeführt wird, welcher den Heckpropeller (118) antreibt.

## Claims

1. Tilt-wing aircraft (10) comprising
a tilt wing (14), for which a number of 2n propellers (16, 18) is provided, where n is a positive integer (1, 2, 3, 4, ...), and
a tail drive and control unit, which is configured to generate a forward thrust, and to also generate a selectively upwardly or downwardly directed thrust component for pitch control and a laterally directed thrust component in hover flight and in climb flight of the aircraft, and
a sheathed tail propeller (78) configured to be pivotable around the vertical axis and the transverse axis of the aircraft.

2. Tilt-wing aircraft according to claim 1, **characterised by** a hybrid drive which, for each propeller (106; 112; 118), comprises a respective electric motor (104; 110; 116) driving said propeller, and also comprises at least one energy generating module (92, 96) which is provided with an internal combustion engine (92) and a generator (96) to generate electrical energy.

3. Tilt-wing aircraft according to claim 2, **characterised in that** at least one further energy generating module (130, 134; 150) is provided.

4. Tilt-wing aircraft according to either claim 2 or 3, **characterised in that** a storage unit (120) for electrical energy is provided.

5. Tilt-wing aircraft according to either claim 3 or claim 4, **characterised in that** the one energy generating module (92, 96) and the further energy generating module (130, 134) are configured to be identical or similar.

6. Tilt-wing aircraft according to either claim 3 or 4, **characterised in that** the further energy generating module is configured as a fuel cell unit (150).

7. Method for operating a tilt-wing aircraft according to any one of claims 2 to 6, **characterised in that** the electrical energy generated by the at least one energy generating module (92, 96) is distributed onto the electric motors (104, 110, 116) which drive the propellers (106, 112, 118), depending on operating requirements.

8. Method according to claim 7, **characterised in that** in cruise flight, most of the electrical energy is supplied to the electric motor (116) which drives the tail propeller (118).

## Revendications

1. Avion à voilure basculante (10) comprenant
une aile basculante (14) pour laquelle est prévu un nombre de 2n hélices (16, 18), n étant un nombre entier positif (1, 2, 3, 4 ...), et
une unité de commande et d'entraînement arrière, réalisée pour produire une avance et pour produire également, en vol stationnaire ainsi qu'en vol ascensionnel de l'avion, une composante de poussée orientée sélectivement vers le haut ou vers le bas pour la commande de profondeur et une composante de poussée orientée latéralement, et comprend une hélice de queue gainée (78), réalisée pour pouvoir pivoter autour de l'axe normal et autour de l'axe latéral de l'avion.

2. Avion à voilure basculante selon la revendication 1, **caractérisé par** un groupe moteur hybride, qui présente respectivement pour chaque hélice (106; 112; 118) un moteur électrique (104; 110; 116) entraînant cette dernière, ainsi qu'au moins un module de production d'énergie (92, 96), muni d'un moteur à combustion interne (92) et d'un générateur (96) pour produire de l'énergie électrique.

3. Avion à voilure basculante selon la revendication 2, **caractérisé en ce qu'**il est prévu au moins un module de production d'énergie supplémentaire (130, 134; 150).

4. Avion à voilure basculante selon l'une des revendications 2 ou 3, **caractérisé en ce qu'**il est prévu une unité de stockage (120) pour de l'énergie électrique.

5. Avion à voilure basculante selon l'une des revendications 3 ou 4, **caractérisé par** une réalisation égale ou similaire du module de production d'énergie (92, 96) et du module de production d'énergie supplémentaire (130, 134).

6. Avion à voilure basculante selon l'une des revendications 3 ou 4, **caractérisé en ce que** le module de production d'énergie supplémentaire est réalisé sous forme d'unité de piles à combustible (150).

7. Procédé de fonctionnement d'un avion à voilure basculante selon l'une des revendications 2 à 6, **caractérisé en ce que** l'énergie électrique, produite par le au moins un module de production d'énergie (92, 96), est répartie suivant l'exigence de fonctionnement sur les moteurs électriques (104, 110, 116), qui entraînent les hélices (106, 112, 118).

8. Procédé selon la revendication 7, **caractérisé en ce que**, en vol de croisière, la partie principale de l'énergie électrique alimente le moteur électrique (116) qui entraîne l'hélice de queue (118).
